# EUROPÄISCHE PATENTANMELDUNG

(11) **EP 1 557 504 A2**
(43) Veröffentlichungstag der Anmeldung: **27.07.2005**
(21) Anmeldenummer: 05001235.0
(22) Anmeldetag: 21.01.2005
(51) Int. Cl.: E04B 1/80

(54) **Verfahren zum Herstellen eines Vakuumpaneels, sowie Vakuumpaneel, insbesondere für Wärmedämmzwecke**

(30) Priorität: 23.01.2004 DE 102004003603; 05.03.2004 DE 102004010939
(71) Anmelder: Woschko Winlite GmbH, 74189 Weinsberg (DE); Rimmele KG, 89584 Ehingen (DE)
(72) Erfinder: Woschko, Manfred, 74245 Löwenstein (DE); Woschko, Donat, 74182 Obersulm (DE); Rimmele, Georg, 89584 Ehingen (DE)
(74) Vertreter: Melzer, Wolfgang, Dipl.-Ing.

(57) **Zusammenfassung**

Die Erfindung betrifft ein Verfahren zur Herstellung von Vakuumpaneelen und derart hergestellte Vakuumpaneele, insbesondere für Wärmedämmzwecke. Gemäß einem Aspekt wird eine in Form gepresste Platte aus pulverförmigen Stützelementen (12) einem Schmelzvorgang zur Bildung einer glasigen Schicht (5) unterworfen, wobei innerhalb der glasigen Schicht (5) der Zwischenraum zwischen den eng aneinanderanliegenden Stützelementen (12) evakuiert ist. Gemäß einem anderen Aspekt besteht das Vakuumpaneel (10, 20) aus einer ein- oder mehrwandigen gasdichten Hülle (11) und einer Füllung aus körnigen oder pulverförmigen entgasten Stützelementen (12), wobei das Innere der Hülle (11) evakuiert ist, wodurch die Stützelemente (12) eng aneinandergerückt und von der Hülle (11) enganliegend umgeben sind, wobei zur Verringerung der Gefahr von Entgasung (Verschlechterung des Vakuums) und einer Verletzung der Hülle beim Verbau gegen gegeneinander wärmezudämmende Flächen zumindest ein Flächenabschnitt der Hülle (11) auf ihrer Außenseite mit einer zusätzlichen Schicht (14) versehen ist.

## Beschreibung

Die Erfindung betrifft ein Verfahren zum Herstellen eines Vakuumpaneels, sowie ein derartiges Vakuumpaneel, insbesondere für Wärmedämmzwecke.

Wesentlich bei solchen Vakuumpaneelen ist der vakuumdichte Abschluss einer Füllung aus körnigen oder pulverförmigen entgasten Stützelementen, insbesondere Kieselsäure-Partikeln, nach Außen, wobei das Innere evakuiert ist und wobei die Stützelemente eng aneinandergerückt sind.

Typisch besteht ein solches Vakuumpaneel aus einer ein- oder mehrwandigen gasdichten Hülle und einer Füllung aus körnigen oder pulverförmigen entgasten Stützelementen, wobei das Innere der Hülle evakuiert ist, wobei die Stützelemente eng aneinandergerückt sind und von der Hülle enganliegend umgeben sind.

Derartige Vakuumpaneele sind in vielfältiger Form bekannt, beispielsweise aus EP 0 106 103 A1, US 4,668,551, WO 00/71849 A1.

Derartige Vakuumpaneele werden zu Wärmedämmzwecken zwischen gegeneinander wärmezudämmende Flächen zur Anlage gebracht. Beispielsweise werden sie zwischen zwei Schalen eines mehrschaligen Mauersteins gebracht oder in ein Bauelement eingeführt, dessen einer Teil außenliegend und dessen anderer Teil innenliegend ist, wobei diese beiden Teile vorzugsweise thermisch getrennt sind, wie etwa bei Fensterrahmenanordnungen und dergleichen Anwendungen, wie sie beispielsweise in der vorgenannten WO 00/71849 A1 nicht abschließend aufgeführt sind.

Derartige Vakuumpaneele haben jedoch einige Nachteile, die den Wärmedämmeffekt gravierend beeinflussen. Zum einen ist die ein- oder mehrlagige Hülle nicht ausreichend gasdicht, sodass durch Eindringen von Gas aus der Umgebung das Vakuum innerhalb der Hülle beeinträchtigt wird, auch im eingebauten Zustand, sodass die Wärmedämmung nachlässt. Zum anderen ist die Hülle insbesondere beim Verbau, das heißt der Anbringung zwischen gegeneinander wärmezudämmenden Flächen anfällig für Verletzung, insbesondere im Kontaktbereich zu diesen Flächen.

Ausgehend hiervon ist es Aufgabe der vorliegenden Erfindung, ein Vakuumpaneel dahingehend zu verbessern, dass die Funktionsfähigkeit, insbesondere die Wärmedämmwirkung mit höherer Sicherheit, bzw. höherer Zeitdauer erreicht werden kann.

Gemäß einem ersten Aspekt der vorliegenden Erfindung wird diese Aufgabe durch ein Verfahren zur Herstellung eines Vakuumpaneels mit den Merkmalen des Anspruchs 1 gelöst, sowie durch ein entsprechendes Vakuumpaneel gemäß den Merkmalen des Anspruchs 19.

Dieser Aspekt der vorliegenden Erfindung wird durch die entsprechenden abhängigen Ansprüche weitergebildet.

Wesentlich für diesen Aspekt der vorliegenden Erfindung ist, dass durch die oberflächenseitige Glasbildung ein Vakuumpaneel geschaffen wird, das keine Nähte hat und eine ziemlich strapazierfähige Oberfläche besitzt.

Die Aufgabe wird gemäß einem zweiten Aspekt der Erfindung durch ein Verfahren mit den Merkmalen des Anspruches 5 bzw. ein Vakuumpaneel mit den Merkmalen des Anspruchs 23 gelöst. Dieser Aspekt der vorliegenden Erfindung wird durch die entsprechenden abhängigen Ansprüche weitergebildet. Dieser Aspekt der Erfindung geht dabei von der Erkenntnis aus, dass bei einer teilweisen Beschichtung, Belegung oder Beplankung der Fläche eines Vakuumpaneels mit Hülle die Sicherheit gegen Verringerung des Vakuums durch "Ausgasen" einerseits und der Schutz gegen Verletzung beim Verbau andererseits stark erhöht ist, jedoch keine Wärmebrücke zwischen gegeneinander wärmezudämmende Flächen geschaffen wird.

Die Erfindung wird anhand der in der Zeichnung dargestellten Ausführungsbeispiele näher erläutert. Es zeigen
- Figur 1: schematisch den Verfahrensablauf beim Herstellen eines Vakuumpaneels gemäß dem ersten Aspekt der vorliegenden Erfindung,
- Figur 2: schematisch im Schnitt ein Vakuumpaneel gemäß dem ersten Aspekt der vorliegenden Erfindung,
- Figur 3: im Schnitt den grundsätzlichen Aufbau eines Vakuumpaneels gemäß dem zweiten Aspekt der vorliegenden Erfindung,
- Figur 4: eine Weiterbildung des Vakuumpaneels gemäß Figur 3,
- Figur 5: eine andere Ausführungsform des Vakuumpaneels gemäß dem zweiten Aspekt der vorliegenden Erfindung,
- Figur 6: schematisch und perspektivisch ein Vakuumpaneel gemäß einem 3. Aspekt der vorliegenden Erfindung,
- Figur 7: den Schnitt A-A in Figur 6,
- Figur 8: den Schnitt B-B in Figur 6,
- Figur 9: schematisch/perspektivisch und in Teilschnitt ein Vakuumpaneel gemäß einem 4. Aspekt der vorliegenden Erfindung,
- Figur 10: vergrößert die Einzelheit X in Figur 9.

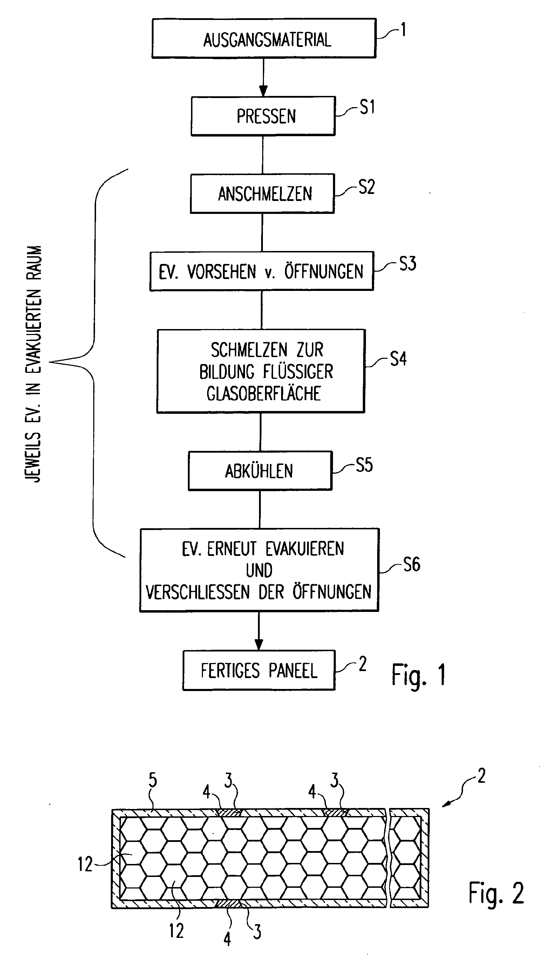

In einem ersten Aspekt der vorliegenden Erfindung, der anhand der Figuren 1 und 2 erläutert wird, wird von der Erkenntnis ausgegangen, dass durch eine Verglasung einer Oberfläche eine einerseits sehr strapazierfähige Oberfläche geschaffen wird, die andererseits gas- und damit auch vakuumdicht ist.

Eine Menge an Ausgangsmaterial 1, ein beispielsweise pulverförmiges oder körniges Material, wird zunächst in einem ersten Schritt S1 in eine Form gepresst, beispielsweise eine platten- oder quaderförmige Form, wie sie bei späteren Anwendungsfällen zu verwenden ist. Bei einer Anwendung zu Wärmedämmzwecken wird durch diesen ersten Schritt S1 eine Formgebung erreicht, die insgesamt für die spätere Anordnung geeignet ist, also ein an den Verlauf der gegeneinander wärmezudämmenden Flächen angepasster Verlauf. Somit können die Oberflächen auch gekrümmt verlaufen.

Eine in dem ersten Schritt S1 durch Pressen erreichte geformte Platte wird dann in einen evakuierten Raum eingebracht und erhitzt, derart, dass ein Anschmelzen gemäß Schritt S2 der Oberfläche erreicht wird, und zwar durch Verschmelzen der einzelnen Teilchen des gepressten Ausgangsmaterials. Hierdurch bildet sich eine im Wesentlichen flüssige Glasschicht.

Wird diese Glasschicht durch Abkühlen gemäß Schritt S5 verfestigt, so härtet die Glasschicht aus und bietet somit einen Verschluss für das innerhalb der Glasschicht, also innerhalb der Platte, zwischen den dort angeordneten nicht geschmolzenen Partikeln des Ausgangsmaterials erreichte Vakuum.

Typisch versuchen bei solchen Schmelzvorgängen jedoch im Inneren noch enthaltene Gasreste und/oder Flüssigkeitsreste zu entweichen und führen zu ungewollten Öffnungen. Zweckmäßig ist es daher, nach dem Anschmelzen gemäß Schritt S2 gezielt Öffnungen 3 (Fig. 2) in der glasigen Oberfläche vorzusehen, derart, dass verdampfende Feuchtigkeit und Gase leicht entweichen können, wie das durch die Schritte S3 und S4 dargestellt ist.

Nach dem Abkühlen gemäß Schritt S5 ist es lediglich erforderlich die Öffnungen 3 zu verschließen, was in Figur 2 durch Verschlusselemente 4 dargestellt ist. Dieses Verschließen hat dabei, wie durch Schritt S6 dargestellt, nach einem Evakuieren, gegebenenfalls erneutem Evakuieren zu erfolgen.

Es entsteht somit ein Vakuumpaneel 2, (Figur 2), das im Inneren durch die Partikel des Ausgangsmaterials 1 gebildete, eng aneinanderanliegende Stützelemente 12 enthält, zwischen denen Vakuum herrscht, wobei die Anordnung der Stützelemente 2 nach außen durch eine Glasschicht 5 gasdicht abgeschlossen ist und eventuell vorgesehene Öffnungen 3 durch Verschlusselemente 4 verschlossen sind. Das derart gebildete Vakuumpaneel 2 zeichnet sich demnach durch eine Glashaut aus und weist keine Nähte auf. Diese Glashaut bildet ein sehr strapazierfähige Schicht 5. Derart gebildete Vakuumpaneele 2 können daher in einfacher Weise weiterverarbeitet werden. Besonders geeignet als Stützelemente 12 sind Kieselsäure-Partikel.

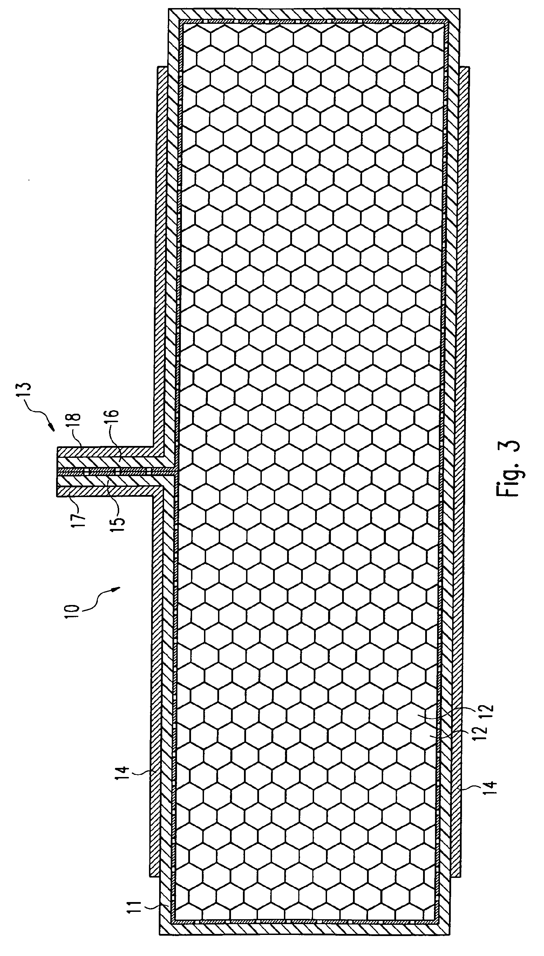

Ein zweiter Aspekt der vorliegenden Erfindung wird anhand der Figuren 3 bis 5 näher erläutert.

Ein Vakuumpaneel 10 für Wärmedämmzwecke gemäß Fig. 3 besteht im Wesentlichen aus einer ein- oder mehrwandigen, üblicherweise zweiwandigen Hülle 11, die gas- bzw. luftdicht ist (bzw. sein soll) und die eine, durch eine Honigwabendarstellung symbolisierte Füllung aus körnigen oder pulverförmigen entgasten Stützelementen 12, vorzugsweise mikroporöse Kieselsäure, enthält. Der Innenraum der Hülle 11 ist evakuiert, wodurch die Stützelemente 12 eng aneinander anrücken und von der Hülle 11 eng anliegend umgeben sind. Der Werkstoff der Stützelemente 12 besteht selbstverständlich aus einem wärmeisolierendem Material, ebenso wie die Hülle 11. Bei der Evakuierung der Hülle 11 und der anschließenden Verschweißung, wobei der so entstehende Stutzen und die Schweißnaht symbolisch und übertrieben als Nahtstelle 13 dargestellt sind, kann das Vakuumpaneel 10 insgesamt in die für die spätere Anordnung geeignete Form gebracht werden, also in eine an den Verlauf der gegeneinander wärmezudämmenden Flächen angepassten Verlauf. Beim Ausführungsbeispiel ist ein plattenförmige Anordnung dargestellt.

Erfindungsgemäß sind dabei die Abschnitte der Hülle 11, die im verbauten Zustand gegen die gegeneinander wärmezudämmenden Flächen jeweils zur Anlage kommen, mit einer zusätzlichen Schicht 14 zumindest abschnittsweise versehen. Für diese zusätzliche Schicht 14 ist wesentlich, dass sie die Gasdichtigkeit der Hülle 11 an den entsprechenden Abschnitten wesentlich erhöht, während ein Beitrag zur Wärmedämmung selbst nicht erfolgen muss. Es kann sich daher um kompakte Materialien handeln, wie Metallfolien oder Metallschichten, beispielsweise eine Aluminiumfolie. Ein solches Material ist auch relativ wenig anfällig hinsichtlich Verletzungen beim Verbau, das heißt hinsichtlich der Gefahr, beim Verbau derart beschädigt zu werden, dass die Dichtheit der Hülle 11 beeinträchtigt ist.

Dies erlaubt es zusätzlich, eine Klebeverbindung zwischen dieser zusätzlichen Schicht 14 und der gegenüberliegenden Seite der zugeordneten der gegeneinander wärmezudämmenden Flächen vorzusehen, die im einzelnen nicht dargestellt sind.

Die erwähnte Klebeverbindung kann eine Punktverklebung sein, die ausschließlich zu Montagezwecken dient, wenn die die gegeneinander wärmezudämmenden Flächen aufweisenden nicht näher dargestellten Bauelemente in anderer Weise miteinander verbunden sind, zweckmäßig thermisch entkoppelt miteinander verbunden sind.

Die Nahtstelle 13 ist dabei in besonderer Weise anfällig für Beschädigungen, jedenfalls beim Einbau. Zweckmäßig ist daher, wie dargestellt, auch die Nahtstelle, die durch zwei miteinander verbundene Laschen 15 und 16 gebildet ist, ebenfalls zusätzlich mit einer zusätzlichen Schicht 17 bzw. 18 versehen, wobei zweckmäßig die Anordnung derart ist, dass die beschichteten Laschen 15, 16 auf die zusätzliche Schicht 14 faltbar sind. Zweckmäßig kann auch in der zugeordneten der gegeneinander wärmezudämmenden Flächen eine entsprechende Vertiefung vorgesehen sein.

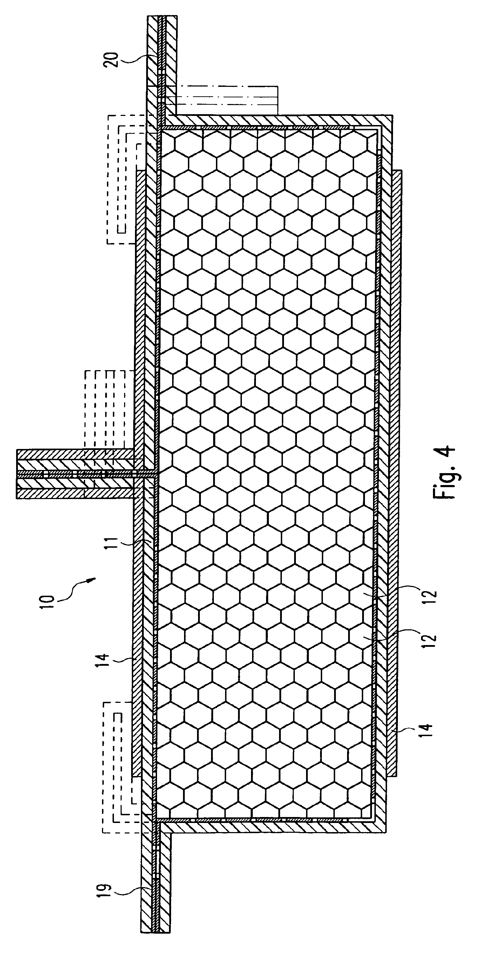

Alternativ kann, wie in Fig. 4 dargestellt, eine Anordnung vorgesehen sein, bei der eine, alternativ zwei, Nahtstellen 19 bzw. 20 derart vorgesehen sind, dass sie die Seite der Hülle 11 fortsetzen, auf der die zusätzliche Schicht 14 aufgebracht ist. Hier ist die Beschichtung der Laschen nicht erforderlich. Die Schweiß- oder Nahtstellen 19 bzw. 20 können dabei wie in Fig. 2 durch Strichlinien dargestellt, gegen die zusätzliche Schicht 14 gefaltet sein, aber auch gegen den Bereich der Hülle 11, der nicht mit einer zusätzlichen Schicht 14 versehen ist (in Strich-Punkt-Linien angedeutet). Im letzteren Fall ist eine Beschichtung unbedingt zu vermeiden.

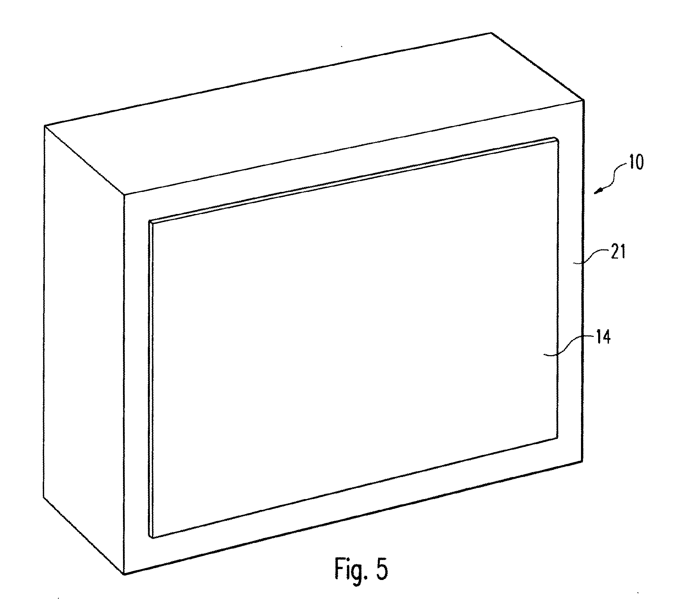

Fig. 5 zeigt perspektivisch eine Anordnung, bei der die durch das Vakuumpaneel 10 gebildete Wärmedämmung im Wesentlichen quaderförmig ist, also eine deutliche Dickenabmessung besitzt. Hier kann statt einer vergleichsweise elastischen Hülle eine vergleichsweise steife schachtel- oder boxartige Hüllenanordnung gewählt sein, die über einen Stutzen oder dergleichen (nicht dargestellt) evakuierbar ist.

Wie dargestellt ist hier eine, und zwar die größte Seitenfläche mit einer zusätzlichen Schicht 14 versehen, und zwar im Wesentlichen ganzflächig mit jedoch deutlichem Abstand zu den Kanten des hier boxartigen Vakuumpaneels 21.
Selbstverständlich kann eine ganzflächige Beschichtung vorgesehen sein.

Es zeigt sich ferner, dass Wärmedämmungen mit einem Vakuumpaneel 10 gemäß der Erfindung auch gut stapelbar sind, das sie an den Abschnitten, die die zusätzliche Schicht 14 aufweisen, gegenüber mechanischen Beschädigungen relativ unempfindlich sind, so dass eine Zwischenlagerung zwischen Herstellung und Verbau in einfacher und damit kostengünstiger Weise möglich ist.

Es zeigt sich ferner, dass ein Kombination des ersten Aspektes mit dem zweiten Aspekt der vorliegenden Erfindung grundsätzlich möglich ist, also auch die glasartige Schicht 5 des Vakuumpaneels 2 gemäß Figur 2 zusätzlich mit einer nicht dargestellten zusätzlichen Schicht 14 versehen werden kann und auch über eine solche Schicht oder auch direkt von der glasartigen Oberfläche aus eine Klebeverbindung zu der gegenüberliegenden Seite der zugeordneten der gegeneinander wärmezudämmenden Flächen vorgesehen werden kann. Es zeigt sich, dass durch eine eventuelle zusätzliche Schicht (ähnlich der Schicht 14 bei dem Vakuumpaneel 10 gemäß dem zweiten Aspekt der vorliegenden Erfindung) zusätzlich oder ergänzend die Funktion der Verschlusselemente 4 der Öffnungen 3 in der glasartigen Schicht 5 erreicht werden kann.

**Bei** allen Ausführungsformen der vorliegenden Erfindung ist die nach außen weisende Oberfläche ohne Beeinträchtigung des Wärmedämmverhaltens gegenüber mechanischen Beschädigungen und gegenüber Ausgasen erheblich verbessert.

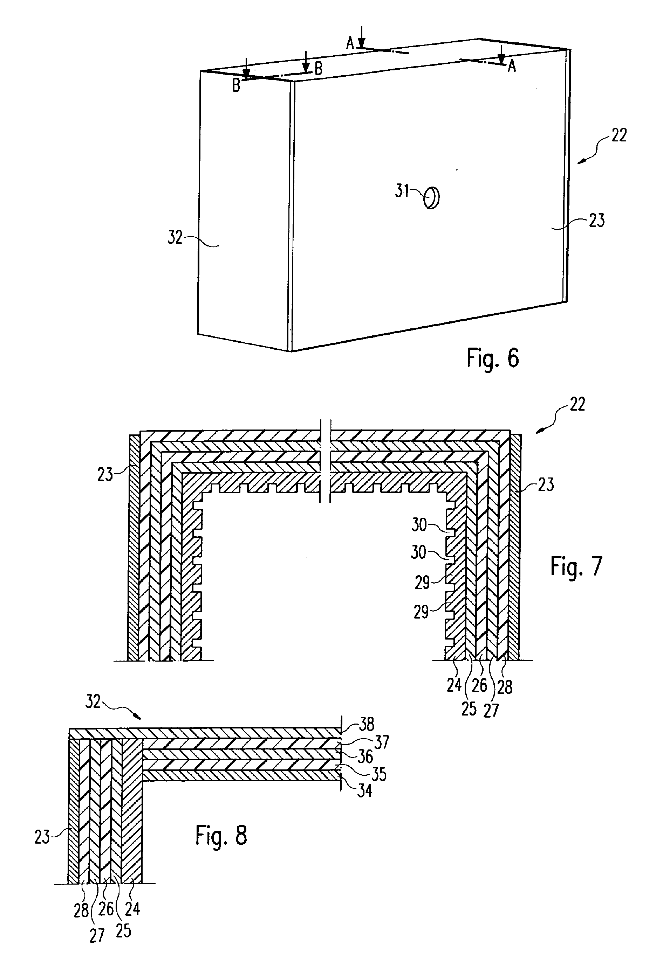

Figur 6 zeigt perspektivisch eine Anordnung ähnlich der Figur 5, bei der die durch ein Vakuumpaneel 22 gebildete Wärmedämmung im wesentlichen quaderförmig ist, also eine deutliche Dickenabmessung besitzt. Hier kann zwar wie weiter oben diskutiert, eine vergleichsweise elastische Hülle, aber auch ein vergleichsweise steife schachtel- oder boxartige Hüllenanordnung gewählt sein, die über einen Stutzen oder dergleichen evakuierbar ist, was beim Ausführungsbeispiel gemäß Figur 6 durch einen Evakuierungs-Auslass 31 schematisch dargestellt ist. Wie dargestellt ist ferner mindestens eine Seitenfläche, und zwar die größte Seitenfläche mit einer zusätzlichen Schicht 23 im Sinne der Ausführungsform nach Figur 5 versehen, und zwar im wesentlichen ganzflächig mit, wie sich aus der Schnittansicht gemäß Figur 7 ergibt, vergleichsweise geringfügigem Abstand zu den Kanten des boxartigen Vakuumpaneels 22. Aus Figur 7 ergibt sich, dass beide großen Seitenflächen in entsprechender Weise durch eine zusätzliche Schicht 23 beschichtet oder "beplankt" ist. Wie weiter oben erläutert, ist es für die zusätzliche Schicht 23 wesentlich, dass die Gasdichtigkeit des Vakuumpaneels bzw. dessen Hülle, an den entsprechenden Wänden wesentlich erhöht ist, während ein Beitrag zur Wärmedämmung selbst nicht erfolgen muss. Deshalb kann es sich um kompakte Materialien, wie Metallfolien oder Metallschichten, beispielsweise eine Aluminiumfolie handeln.

Gemäß dem 3. Aspekt der vorliegenden Erfindung ist es wesentlich, dass die Innenwand 24 (Figur 7 und Figur 8) der gasdichten Hülle des Vakuumpaneels 22 in besonderer Weise ausgebildet ist, nämlich rippenartige Erhöhungen 29 und kanalartige Vertiefungen 30 aufweist. Die hier nicht dargestellte Füllung aus körnigen oder pulverförmigen entgasten Stützelementen, vorzugsweise mikroporöse Kieselsäure, liegt jedenfalls üblicherweise eng an die Vorsprünge 29 an und wird wohl, zumindest in wesentlichem Umfang auch in die kanalartigen Vertiefungen 30 eindringen. Andererseits wird jedoch beim Erzeugen des Vakuums innerhalb der Hülle, also beim Evakuieren durch den Evakuierungs-Auslass 31 hindurch, die Luft zwischen den Stützelementen hindurch und längs der Innenwand 24 gesaugt, so dass eine durch die kanalartigen Vertiefungen 30 bewirkte Kanalisierung und damit Verbesserung und Beschleunigung des Evakuierungsvorganges erzielt wird. Bei individueller Fertigung der Gesamthülle kann daher der Verlauf der kanalartigen Vertiefungen 30 und der rippenartigen Erhöhungen so gewählt werden, dass die durch den Evakuierungs-Auslass 21 abgesaugte Luft optimal strömt.

Figur 7 und Figur 8 zeigen, dass der gesamte Wandaufbau der Hülle mehrschichtig ist, ausgehend von der Innenwand 24 weitere Schichten 25, 26 und 27, 28. Die Anzahl und die Art des Materials der jeweiligen Schichten wird sich nach dem jeweiligen Anwendungsfall richten.

Gemäß einem weiteren Aspekt, der insbesondere beim boxartigen Aufbau eines Vakuumpaneels 22 von Vorteil ist, wird ein Teil der Hülle des Vakuumpaneels 22 zunächst durch Extrudieren eines Kunststoffrohrs erzeugt, das den gewünschten Querschnitt besitzt. Anschließend wird das extrudierte Kunststoffrohr abgelängt und werden anschließend beidseitig an den offenen Enden des extrudierten Rohrs Deckel 32 gasdicht bzw. vakuumdicht befestigt. Beim dargestellten Ausführungsbeispiel weist gemäß Figur 8 der Deckel 32 einen der Wand des extrudierten Rohres entsprechenden mehrschichtigen Aufbau auf mit einer Innenwand 34 und aufeinanderfolgenden Schichten 35, 36 und 37, 38.

Der Deckel 32 kann eingeklebt oder eingeschweißt bzw. aufgeklebt oder aufgeschweißt sein. Es kann auch eine in Figur 8 dargestellte teilweise ineinander eingreifende Ausbildung gewählt werden.

Selbstverständlich wird der Innenraum der so gebildeten Hülle mit den hier nicht dargestellten Stützelementen eng gepackt gefüllt, wie das an sich bekannt ist und wird wie oben erläutert über den Evakuierungs-Anschluss 31 die Evakuierung durchgeführt, wonach dieser Evakuierungs-Anschluss 31 dicht verschlossen wird.

Ein so ausgebildetes Vakuumpaneel 22 weißt sehr hohe Eigensteifigkeit auf und ist daher bei vielen Anwendungen besser verwendbar als Vakuumpaneele mit nur geringen Dickenabmessungen und dünner sackartiger Hülle, selbst wenn diese, wie weiter oben erläutert, durch eine zusätzliche Schicht beschichtet ist. Ferner eignet sich eine derartige Ausführung besser für eine industrielle Fertigung mit hohen Stückzahlen.

Beispielsweise eignen sich für die Schicht 24 ein Polyamid, für die Schichten 25 und 27 ein EVOH und für die Schichten 26 und 28 ein PE (Polyethylen).

Gemäß einem weiteren Aspekt der vorliegenden Erfindung ist es möglich den Vakuumpaneelen gemäß der vorliegenden Erfindung neben der erwünschten wärmedämmenden Eigenschaft eine zusätzliche Eigenschaft im besonderen Maße zu verleihen, nämlich dadurch, dass die Materialien der Hülle und des Stützmaterials gezielt zur Verbesserung des Schalldämmmaßes der Gesamtanordnung, bei der das Vakuumpaneel verwendet wird, zu verbessern.

Bekanntlich wird bei der Übertragungvon Schall über ein Bauteil wie eine Wand nur ein Bruchteil der auffallenden Schallenergie an der anderen Seite des Bauteils abgestrahlt, was als Schalldämmung bezeichnet wird. In der Praxis ist das Schalldämmmaß stark frequenzabhängig, sowie ferner abhängig von bestimmten anderen physikalischen Parametern, wie Biegesteifigkeit, Elastizitätsmodul, flächenbezogener Masse der Wand usw.. Zur Physik der Schalldämmung sei beispielsweise verwiesen auf Werner Schirmer (Hrsg.), technischer Lärmschutz, VDI-Verlag GmbH, Düsseldorf 1996.

Insbesondere bei einer Verwendung bei zwei oder mehrschaligen Mauersteinen, bei denen zwischen den mindestens zwei Schalen ein Vakuumpaneel angeordnet ist, sind die vorstehend genannten Materialien von Vorteil.

Zweckmäßig sind solche Materialien für den vakuumdichten bzw. gasdichten Abschluss der Stützelemente, die insbesondere dicht gegen und chemisch nicht angreifbar sind durch Stickstoff, Sauerstoff und auch dampfförmiges Wasser (insbesondere zum Korrosionsschutz).

Somit können Vakuumpaneele nicht nur zur Erhöhung der Wärmedämmung, sondern auch zur Verbesserung der Schalldämmung, und zwar sogar gemeinsam herangezogen werden.

Es zeigt sich, dass dieser 3. Aspekt der vorliegenden Erfindung auch bei Vakuumpaneelen mit einer sackartigen Hülle anwendbar ist, insbesondere solchen wie sie weiter oben geschildert sind.

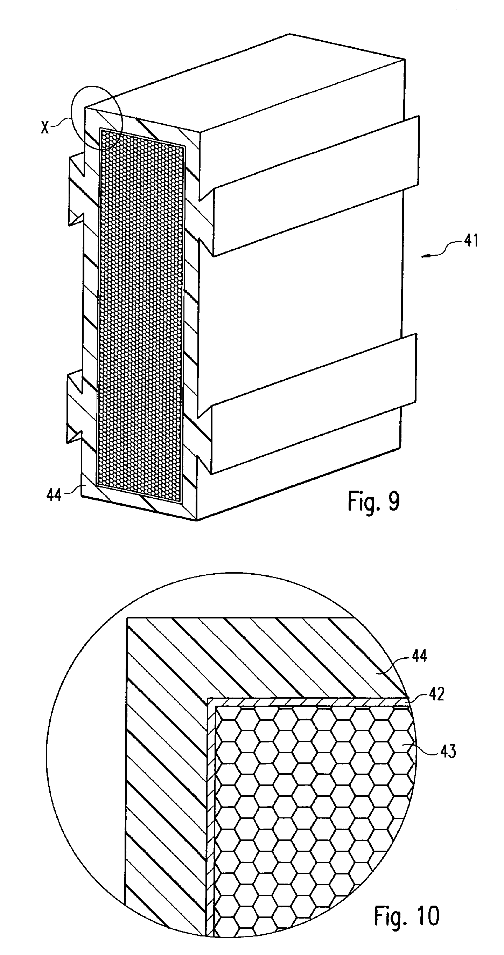

Figur 9 zeigt im Teilschnitt ein Vakuumpaneel 41, das zunächst im Inneren eine Anordnung aus einer Hülle 42 und einer Füllung 43, die beispielsweise aus einem pulverförmigen oder körnigen Material, z. B. pyrogene Kieselsäure, besteht, aufweist, wobei diese Anordnung evakuiert ist. Diese Anordnung 42, 43 ist, wie aus Figur 9 ersichtlich, von einem Kunststoffmaterial vollständig umgeben, wobei dieses Kunststoffmaterial als Umspritzung oder Umgießung 44 ausgebildet ist.

Ein derartiges Vakuumpaneel 41 läßt sich durch Einbringen der Anordnung 42, 43 in eine Form und durch Umgießen oder Umspritzen in dieser Form mittels eines geeigneten Kunststoffmaterials, wie Polyurethan vergleichsweise einfach herstellen. Von Vorteil ist dabei, wenn die Hülle 42 durch eine metallisierte Folie gebildet ist.

Die einfache Herstellbarkeit des Vakuumpaneels 41 erlaubt es, die Außenseitenflächen der Umspritzung oder Umgießung 44 an einen Anwendungsfall angepaßt auszubilden, beispielsweise durch Angießen bzw. Anformen von Vorsprüngen. Beim Ausführungsbeispiel sind leistenartige Vorsprünge 45 mit schwalbenschwanzförmigem Querschnitt an voneinander abgewandten Außenseitenflächen der Umhüllung bzw. Umgießung 44 des Vakuumpaneels 41 angeformt. Hierdurch ist es in einfacher Weise möglich, das Vakuumpaneel 41 zwischen gegeneinander Wärme zu dämmende Bauelemente einzuführen.

Durch die Ausbildung der Umhüllung der Umspritzung oder Umgießung 44 ist ein erhöhter Schutz der Anordnung 42, 43 erzielt.

## Patentansprüche

1. Verfahren zum Herstellen eines Vakuumpaneels (2), das nach außen gasdicht eine Füllung aus körnigen oder pulverförmigen entgasten Stützelementen (12), insbesondere Kieselsäure-Partikeln, aufweist, wobei das Innere evakuiert wird und wobei die Stützelemente (12) eng aneinandergerückt sind,
**dadurch gekennzeichnet,**
**dass** die Stützelemente (12) mechanisch zu einer der Vakuumpaneelgröße entsprechenden geformten Platte zusammengepresst (S1) werden,
**dass** die Platte in einem evakuierten Raum eingebracht wird und dieser Raum erwärmt wird,
**dass** die Platte in dem evakuierten Raum derart aufgeheizt wird, dass an der Oberfläche der Platte durch Verschmelzen der dort befindlichen einzelnen Stützelemente eine flüssige Glasschicht (5) ausgebildet wird, und
**dass** das so gebildete Paneel abgekühlt (S5) wird, wobei die flüssige Glasschicht (5) erhärtet.

2. Verfahren nach Anspruch 1,
**dadurch gekennzeichnet,**
**dass** bei dem Verschmelzungsvorgang in der ab- bzw. angeschmolzenen Oberfläche Öffnungen (3) gebildet werden (S3), damit verdampfende Feuchte und Gase entweichen können und dass nach dem Abkühlen (S5) die die Öffnungen aufweisende Platte evakuiert wird und dann die Öffnungen verschlossen werden (S6).

3. Verfahren nach Anspruch 1 oder 2,
**dadurch gekennzeichnet,**
**dass** die Stützelemente (12) durch pulvrige Kieselsäure gebildet sind.

4. Verfahren nach einem der Ansprüche 1 bis 3,
**dadurch gekennzeichnet,**
**dass** mindestens ein Flächenabschnitt des so gebildeten Vakuumpaneels (2) an der Außenseite mit einer zusätzlichen Schicht versehen wird.

5. Verfahren zum Herstellen eines Vakuumpaneels (10), das aus einer ein- oder mehrwandigen gasdichten Hülle (11) und einer Füllung aus körnigen oder pulverförmigen entgasten Stützelementen (12) besteht, wobei das Innere der Hülle (11) evakuiert ist, wobei die Stützelemente (12) eng aneinandergerückt sind und von der Hülle (11) enganliegend umgeben sind,
**dadurch gekennzeichnet,**
**dass** mindestens ein Flächenabschnitt der Hülle (11) des Vakuumpaneels (10) an der Außenseite der Hülle (11) mit einer zusätzlichen Schicht (14) versehen wird.

6. Verfahren nach Anspruch 5,
**dadurch gekennzeichnet,**
**dass** die Stützelemente (12) durch mikroporöse Kieselsäure gebildet sind.

7. Verfahren nach Anspruch 5 oder 6,
**dadurch gekennzeichnet,**
**dass** die zusätzliche Schicht (14) auf die Hülle (11) des Vakuumpaneels (10) aufgeklebt wird.

8. Verfahren nach einem der Ansprüche 5 bis 7,
**dadurch gekennzeichnet,**
**dass** die Hülle (11) miteinander gasdicht verschweißte Endlaschen (15, 16) aufweist, wobei zwischen den Endlaschen (15, 16) vor deren endgültigem Verschweißen die Evakuierung erfolgt und die Endlaschen seitlich (19, 20) von einem/dem mit der zusätzlichen Schicht (14) versehenen Flächenabschnitt wegragen und von diesem weg auf die zusätzliche Schicht (14) gefaltet werden.

9. Verfahren nach einem der Ansprüche 4 bis 8,
**dadurch gekennzeichnet,**
**dass** die zusätzliche Schicht eine luftdichte Schicht ist.

10. Verfahren nach einem der Ansprüche 4 bis 9,
**dadurch gekennzeichnet,**
**dass** die zusätzliche Schicht eine Metallfolie insbesondere Aluminiumfolie ist.

11. Verfahren nach einem der Ansprüche 4 bis 10
**dadurch gekennzeichnet,**
**dass** das Vakuumpaneel (2, 10) in eine flächige Form gebracht ist, bei der zwei Seitenflächen an den Verlauf von gegeneinander wärmezudämmenden Flächen angepasst sind und im Gebrauch an diese zur Anlage kommen und mit der zusätzlichen Schicht (14) zumindest abschnittsweise versehen werden.

12. Verfahren nach einem der Ansprüche 4 bis 11,
**dadurch gekennzeichnet,**
**dass** das Vakuumpaneel (10) eine Quaderform (21) definiert..

13. Verfahren nach einem der Ansprüche 1 bis 12,
**dadurch gekennzeichnet,**
**dass** bei Anwendung zu Wärmedämmzwecken der der zugeordneten Fläche der gegeneinander wärmezudämmenden Flächen zugewandte Flächenabschnitt des Vakuumpaneels (2, 10) gegebenenfalls die dort vorgesehene zusätzliche Schicht (14) zum zumindest punktweisen Verkleben mit der zugeordneten Fläche der gegeneinander wärmezudämmenden Flächen verwendet wird.

14. Verfahren nach einem der Ansprüche 5 bis 13,
**dadurch gekennzeichnet,**
**dass** eine Kunststoffrohr mit rechteckigem Querschnitt extrudiert wird, das Kunststoffrohr auf die gewünschte Länge abgelängt wird, die Endöffnungen durch einen Deckel (32) gasdicht verschlossen werden, wobei der Innenraum der so gebildeten Hülle mit der Füllung gefüllt wird und anschließend die Evakuierung durchgeführt wird.

15. Verfahren nach Anspruch 14,
**dadurch gekennzeichnet,**
**dass** das Verschließen durch Verkleben, Verschweißen oder dergleichen des Deckels (32) mit dem abgelängten Kunststoffrohr erfolgt.

16. Verfahren nach Anspruch 14 oder 15,
**dadurch gekennzeichnet,**
**dass** das Verschließen bei gefülltem Innenraum in einer Vakuumkammer stattfindet.

17. Verfahren nach einem der Ansprüche 5 bis 13,
**dadurch gekennzeichnet,**
**dass** die Anordnung aus Hülle (42) und Füllung (43) nach Evakuierung in eine Form eingebracht wird und diese Anordnung zur Ausbildung der zusätzlichen Schicht mit einem Kunststoffmaterial umgossen oder umspritzt (44) wird.

18. Verfahren nach Anspruch 17,
**dadurch gekennzeichnet,**
**dass** beim Umgießen bzw. Umspritzen an mindestens einer ihrer Außenseitenflächen ferner mindestens ein Vorsprung (45) angeformt wird.

19. Vakuumpaneel, insbesondere für Wärmedämmzwecke, mit im Inneren enganeinanderanliegenden pulverförmigen oder körnigen Stützelementen (12), insbesondere pulverförmigen Kieselsäure-Partikeln, und einer durch Schmelzvorgänge erreichten dichten Glasschicht (5) an der Außenseite, wobei die Zwischenräume zwischen den Stützelementen (12) evakuiert sind.

20. Vakuumpaneel nach Anspruch 19,
**dadurch gekennzeichnet,**
**dass** während des Schmelzvorgangs zur Bildung der Glasschicht (5) erreichte Öffnungen (3) nach Außen verschlossen (4) sind.

21. Vakuumpaneel nach Anspruch 19 oder 20,
**dadurch gekennzeichnet,**
**dass** die Stützelemente (12) durch pulvrige Kieselsäure gebildet sind.

22. Vakuumpaneel nach einem der Ansprüche 19 bis 21,
**dadurch gekennzeichnet,**
**dass** zumindest ein Flächenabschnitt an der Außenseite mit einer zusätzlichen Schicht versehen ist.

23. Vakuumpaneel insbesondere für Wärmedämmzwecke,
bestehend aus einer ein- oder mehrwandigen gasdichten Hülle (11) und einer Füllung aus körnigen oder pulverförmigen entgasten Stützelementen (12), wobei das Innere der Hülle (11) evakuiert ist, wobei die Stützelemente (12) eng aneinandergerückt sind und von der Hülle (11) enganliegend umgeben sind, **dadurch gekennzeichnet, dass** das Vakuumpaneel (10) mindestens einen Flächenabschnitt aufweist, bei dem die Hülle (11) auf ihrer Außenseite mit einer zusätzlichen Schicht (14) versehen ist.

24. Vakuumpaneel nach Anspruch 23,
**dadurch gekennzeichnet,**
**dass** die Stützelemente (12) durch mikroporöse Kieselsäure gebildet sind.

25. Vakuumpaneel nach Anspruch 23 oder 24,
**dadurch gekennzeichnet,**
**dass** die zusätzliche Schicht (14) auf die Hülle (11) des Vakuumpaneels (10) aufgeklebt ist.

26. Vakuumpaneel nach einem der Ansprüche 23 bis 25,
**dadurch gekennzeichnet,**
**dass** die Hülle (11) miteinander gasdicht verschweißte Endlaschen (15, 16) aufweist, wobei zwischen den Endlaschen (15, 16) vor deren endgültigem Verschweißen die Evakuierung erfolgt und die Endlaschen seitlich (19, 20) von einem/dem mit der zusätzlichen Schicht (14) versehenen Flächenabschnitt wegragen und von diesem weg oder auf die zusätzlichen Schicht (14) faltbar ist.

27. Vakuumpaneel nach einem der Ansprüche 22 bis 26,
**dadurch gekennzeichnet,**
**dass** die zusätzliche Schicht eine luftdichte Schicht ist.

28. Vakuumpaneel nach einem der Ansprüche 22 bis 27,
**dadurch gekennzeichnet,**
**dass** die zusätzliche Schicht eine Metallfolie insbesondere Aluminiumfolie ist.

29. Vakuumpaneel nach einem der Ansprüche 22 bis 28,
**dadurch gekennzeichnet,**
**dass** das Vakuumpaneel (2, 10, 20) in eine flächige Form gebracht ist, bei der zwei Seitenflächen an den Verlauf von gegeneinander wärmezudämmenden Flächen angepasst sind und im Gebrauch an diese zur Anlage kommen und mit der zusätzlichen Schicht (14) zumindest abschnittsweise versehen sind.

30. Vakuumpaneel nach einem der Ansprüche 22 bis 29,
**dadurch gekennzeichnet,**
**dass** das Vakuumpaneel (10) eine Quaderform (21) definiert.

31. Vakuumpaneel nach einem der Ansprüche 19 bis 30,
**dadurch gekennzeichnet,**
**dass** bei Anwendung der der zugeordneten Fläche der gegeneinander wärmezudämmenden Flächen zugewandte Flächenabschnitt gegebenenfalls die dort vorgesehene zusätzliche Schicht (14) zum zumindest punktweisen Verkleben mit der zugeordneten Fläche der gegeneinander wärmezudämmenden Flächen dient.

32. Vakuumpaneel, nach einem der Ansprüche 22 bis 31,
**dadurch gekennzeichnet,**
**dass** die Hülle aus einem ein- oder mehrschichtigen Kunststoffkörper besteht, dessen Innenwand (24) rippenartige Erhöhungen (29) und kanalartige Vertiefungen (30) derart aufweist, dass beim Evakuieren durch einen Evakuierungs-Auslass (31) strömende Luft zu diesem geführt wird.

33. Vakuumpaneel nach Anspruch 32,
**dadurch gekennzeichnet,**
**dass** zumindest die Innenwand (24) aus Polyamid gebildet ist.

34. Vakuumpaneel nach Anspruch 31 oder 33,
**dadurch gekennzeichnet,**
**dass** zumindest eine der anderen Schichten aus einem von Polyethylen und EVOH gebildet ist.

35. Vakuumpaneel nach einem der Ansprüche 22 bis 31,
**dadurch gekennzeichnet,**
**dass** die Hülle durch ein extrudiertes und abgelängtes Kunststoffrohr gebildet ist, dessen Endöffnungen durch einen Deckel gasdicht verschlossen sind.

36. Vakuumpaneel nach Anspruch 35, dass der Deckel verklebt, verschweißt oder dergleichen ist.

37. Vakuumpaneel nach Anspruch 35 oder 36,
**dadurch gekennzeichnet,**
**dass** das Kunststoffrohr mehrschichtig ist, die Innenwand aus Polyamid gebildet ist und mindestens eine der anderen Schichten aus einem von Polyethylen und EVOH gebildet ist.

38. Vakuumpaneel nach Anspruch 37,
**dadurch gekennzeichnet,**
**dass** zumindest die äußerste Schicht durch Polyethylen gebildet ist.

39. Vakuumpaneel nach einem der Ansprüche 22 bis 34,
**dadurch gekennzeichnet,**
**dass** die zusätzliche Schicht Teil einer Umspritzung oder Umgießung (44) der Hülle (42) mit einem Kunststoffmaterial ist.

40. Vakuumpaneel nach Anspruch 39,
**dadurch gekennzeichnet,**
**dass** das Kunststoffmaterial Polyurethan ist.

41. Vakuumpaneel nach einem der Ansprüche 39 bis 40,
**dadurch gekennzeichnet,**
**dass** die Umspritzung bzw. Umgießung (44) an mindestens einer ihrer Außenflächen mindestens einen angegossenen bzw. angespritzten Vorsprung (45) aufweist.

42. Vakuumpaneel nach Anspruch 41,
**dadurch gekennzeichnet,**
**dass** der Vorsprung (45) schwalbenschwanzförmigen Querschnitt aufweist.

43. Vakuumpaneel nach einem der Ansprüche 39 bis 42,
**dadurch gekennzeichnet,**
**dass** die Hülle (42) durch eine metallierte Folie gebildet ist.

44. Vakuumpaneel nach einem der Ansprüche 19 bis 43,
**dadurch gekennzeichnet, dass** die Materialien der Hülle und/oder der Füllung ferner so ausgewählt sind, dass auch hohe Schalldämmung erzielt ist.
